# EUROPÄISCHE PATENTSCHRIFT

(11) **EP 4 241 103 B1**
(45) Veröffentlichungstag und Bekanntmachung des Hinweises auf die Patenterteilung: **11.02.2026**
(21) Anmeldenummer: 21806952.4
(22) Anmeldetag: 08.11.2021
(51) Int. Cl.: G01S 5/02, G01S 19/21, H04W 4/02, G01S 5/00, H04W 4/029, H04W 4/44

(54) **VALIDIERUNG EINER FAHRZEUGPOSITION**
VALIDATION OF A VEHICLE POSITION
VALIDATION DE LA POSITION D'UN VÉHICULE

(30) Priorität: 09.11.2020 AT 509652020
(43) Veröffentlichungstag der Anmeldung: 13.09.2023
(73) Patentinhaber: AVL List GmbH, 8020 Graz (AT)
(72) Erfinder: PRILLER, Peter, 8111 Gratwein-Straßengel (AT)
(74) Vertreter: Patentanwälte Pinter & Weiss OG
(86) Internationale Anmeldenummer: PCT/AT2021/060412
(87) Internationale Veröffentlichungsnummer: WO 2022/094643

(56) Entgegenhaltungen:
- DE-A1- 102015 211 279
- US-A1- 2017 365 171
- OSAMA ABUMANSOOR ET AL: "A Secure Cooperative Approach for Nonline-of-Sight Location Verification in VANET", IEEE TRANSACTIONS ON VEHICULAR TECHNOLOGY, IEEE, USA, vol. 61, no. 1, 1 January 2012 (2012-01-01), pages 275 - 285, XP011397245, ISSN: 0018-9545, DOI: 10.1109/TVT.2011.2174465

## Beschreibung

Die gegenständliche Erfindung betrifft ein Verfahren zur Validierung einer vermeintlichen Fahrzeugposition eines Fahrzeugs. Weiters betrifft die gegenständliche Erfindung eine Validierungsvorrichtung zur Validierung einer durch eine Ortungseinheit eines Fahrzeugs vorgegebenen vermeintlichen Fahrzeugposition.

Zur Bestimmung einer Fahrzeugposition eines Fahrzeugs ist am Fahrzeug eine Ortungseinheit vorgesehen. Die Ortungseinheit kommuniziert beispielsweise mit einem Satellitennavigationssystem (z.B. ein GNSS/GPS-Satellit), welches der Ortungseinheit ein Positionssignal zur Ermittlung der vermeintlichen Fahrzeugposition zur Verfügung stellt. Bei einem sogenannten GNSS Spoofing wird eine falsche Fahrzeugposition erzeugt, z.B. indem ein Angreifer ein gefälschtes Positionssignal erzeugt, das stärker als das Positionssignal des Satellitennavigationssystem ist, und entsprechend von der Ortungseinheit akzeptiert wird. Damit kann es zu einer fehlerhaften Berechnung der Fahrzeugposition kommen. Ein Angreifer kann also vorgeben, wo sich eine Ortungseinheit "wähnt". Natürlich kann die Ortungseinheit auch aus anderen Gründen, d.h. "irrtümlich", eine falsche Fahrzeugposition ermitteln. In beiden Fällen kann basierend auf falscher Information eine Fehleinschätzung einer Fahrsituation erfolgen. Damit kann der Fall eintreten, dass ineffiziente, oder sogar gefährliche Aktionen in Fahrerassistenzsystemen (ADAS) und/oder teilautomatisierten/vollautomatisierten Fahrsystemen (AD) ausgelöst werden. Es sind beispielsweise Fälle bekannt, in denen eine Notbremsfunktion eines Fahrzeugs durch eine gefälschte Anweisung aktiviert wurde.

Aus diesem Grund ist es erstrebenswert die Fahrzeugposition zu validieren. Die DE 10 2015 211 279 A1 beschreibt ein Verfahren zum Erkennen von GPS-Spoofing durch Ermittlung der Fahrzeugposition anhand von Objekten im Umfeld und Abgleich mit dem erhaltenen GPS-Signal. Dabei werden auch Karten verwendet, um zu bestimmen, ob die vom GPS-System vorgegebene Position plausibel ist, wobei Kameras Objekte in der Umgebung erkennen und mit der Karte abgleichen. Die DE 10 2017 209 5 594 A1 offenbart eine Erkennung von GNSS-Spoofing, wobei die GNSS-Position mit einer aus einer V2X-Nachricht extrahierten Position verglichen wird. Dies erfolgt durch Abgleich der mittels GNSS ermittelten Positionen von mehreren Verkehrsteilnehmern. Diese können sich beispielsweise nicht zur gleichen Zeit am selben Ort befinden. Es können Kartendaten verwendet werden, um in ergänzender Weise zu verhindern, dass durch einen Vergleich fehlerhaft auf ein Spoofing geschlossen wird, wenn sich die Verkehrsteilnehmer beispielsweise in verschiedenen Ebenen übereinander befinden. Die US 2017/0365171 A1 zeigt beispielsweise ein Verfahren für einen Plausibilitätscheck in einer dynamischen Umgebung für V2X-Kommunikation, in welcher ein Fahrzeug mit anderen, entfernten Fahrzeugen kommuniziert, um nicht plausible Positionsdaten von Fahrzeugen zu erkennen, wobei in erster Linie der sogenannte "Received Signal Strength Indicator" (RSSI), ein Indikator für die Empfangssignalstärke, verwendet wird. Weiterhin offenbart O. Abumansoor et al., "A Secure Cooperative Approach for Nonline-of-Sight Location Verification in VANET" IEEE Transactions on Vehicular Technology, IEEE, USA, Bd. 61, Nr. 1, 1. Januar 2012, pp. 275-285 einen Austausch von Fahrzeugs- und Ereignisinformationen zwischen Fahrzeugen eines Fahrzeug-Ad-hoc-Netzwerks (englisch Vehicular Ad hoc network oder kurz: VANET), welche für Netzwerkdienste und Anwendungen notwendig sind, wobei physische Hindernisse den Informationsaustausch behindern können.

Es sind auch Methoden bekannt, welche eine (Einfalls)Richtung des Satellitensignals detektieren. Damit kann ein GNSS-Spoofing erkannt werden, da erd-basierte Signale von Satellitensignalen unterschiede werden können.

Es ist eine Aufgabe der gegenständlichen Erfindung, ein Verfahren zur Authentifizierung einer vermeintlichen Fahrzeugposition anzugeben.

Diese Aufgabe wird erfindungsgemäß gelöst, indem ein Empfänger des Fahrzeugs eine durch einen Sender gesendete V2X-Nachricht empfängt und aus der V2X-Nachricht eine Senderposition des Senders ermittelt, wobei lokale Umgebungsgeodaten, umfassend eine Positionierung einer Anzahl stationärer Objekte in Form von zwei- und/oder dreidimensionalen Karten und physikalische Objekteigenschaften, die Reflexionseigenschaften und/oder Dämpfungseigenschaften der stationären Objekte umfassen, zur Verfügung gestellt werden, wobei ausgehend von der Senderposition, unter Berücksichtigung der lokalen Umgebungsgeodaten und der vermeintlichen Fahrzeugposition ein Signalpfad der V2X-Nachricht simuliert wird, wobei bei der Simulation des Signalpfads eine Reflexion und/oder eine Beugung und/oder eine Absorption der V2X-Nachricht an den stationären Objekten berücksichtigt wird und aus dem simulierten Signalpfad und der vermeintlichen Fahrzeugposition zumindest eine simulierte physikalische Empfangssignaleigenschaft ermittelt wird, beim Empfang der V2X-Nachricht zumindest eine tatsächliche physikalische Empfangssignaleigenschaft der V2X-Nachricht ermittelt wird, und die vermeintliche Fahrzeugposition validiert wird, sofern die zumindest eine simulierte physikalische Empfangssignaleigenschaft von der zumindest einen tatsächlichen physikalischen Empfangssignaleigenschaft um weniger als einen Grenzwert abweicht.

Weiters wird die Aufgabe durch eine Validierungsvorrichtung gelöst, wobei eine Extraktionseinheit vorgesehen ist, welche ausgestaltet ist, bei Empfang einer von einem Sender gesendeten und durch einen Empfänger des Fahrzeugs empfangenen V2X-Nachricht aus der V2X-Nachricht eine Senderposition des Senders zu ermitteln, wobei eine Analyseeinheit vorgesehen ist, welche ausgestaltet ist, beim Empfang der V2X-Nachricht zumindest eine tatsächliche physikalische Empfangssignaleigenschaft zu ermitteln, wobei eine Geodateneinheit vorgesehen ist, welche ausgestaltet ist, lokale Umgebungsgeodaten, umfassend eine Positionierung einer Anzahl an stationären Objekten in Form von zwei- und/ oder dreidimensionalen Karten und physikalischen Objekteigenschaften, die Reflexionseigenschaften und/oder Dämpfungseigenschaften der stationären Objekte umfassen, zur Verfügung zu stellen, eine Simulationseinheit vorgesehen ist, welche mit der Extraktionseinheit und der Geodateneinheit verbunden und ausgestaltet ist, unter Verwendung der Senderposition, den lokalen Umgebungsgeodaten und der vermeintlichen Fahrzeugposition einen Signalpfad der V2X-Nachricht zu simulieren, bei der Simulation des Signalpfads eine Reflexion und/oder eine Beugung und/oder eine Absorption der V2X-Nachricht an den stationären Objekten zu berücksichtigen und aus dem simulierten Signalpfad und der vermeintlichen zumindest einen simulierten physikalischen Empfangssignaleigenschaft zu ermitteln, und wobei eine Validierungseinheit vorgesehen ist, welche mit der Simulationseinheit und mit der Analyseeinheit verbunden und ausgestaltet ist, die vermeintliche Fahrzeugposition zu validieren, sofern die zumindest eine simulierte physikalische Empfangssignaleigenschaft von der zumindest einen tatsächlichen physikalischen Empfangssignaleigenschaft um weniger als ein Grenzwert abweicht. Natürlich können die Validierungsvorrichtung und deren untergeordnete Einheiten ausgestaltet sein, auch die weiteren in Folge beschriebenen Verfahrensschritte auszuführen. Als Validierung wird eine Kennzeichnung als vertrauenswürdig angesehen.

Es wird erfindungsgemäß nicht lediglich eine potentielle physikalische Empfangssignaleigenschaft auf Basis der relativen Positionierung von Sender und Empfänger (d.h. Distanz und Ausrichtung) berechnet und mit einer tatsächlichen physikalischen Empfangssignaleigenschaft der empfangenen V2X-Nachricht verglichen, sondern unter Berücksichtigung lokaler Umgebungsgeodaten ein Signalpfad simuliert. Damit sind für den simulierten Signalpfad nicht lediglich die relative Positionierung von Sender und Empfänger ausschlaggebend, sondern auch lokale Geodaten, welche den Signalpfad beeinflussen. Durch die Simulation des Signalpfads unter Berücksichtigung lokaler Umgebungsgeodaten ist es für einen Angreifer erschwert eine gefälschte Fahrzeugposition zu erzeugen, da eine gefälschte Fahrzeugposition zu einem falschen simulierten Signalpfad führt, was dazu führt, dass die simulierten physikalischen Empfangssignaleigenschaften nicht mit den tatsächlichen physikalischen Empfangssignaleigenschaften übereinstimmen. Als "vermeintliche Fahrzeugposition" gilt grundlegend die von der Ortungseinheit vorgegebene oder ermittelte Fahrzeugposition, welche mit der tatsächlichen Fahrzeugposition übereinstimmen kann oder von der tatsächlichen Fahrzeugposition abweichen kann.

Als Umgebungsgeodaten liegen geografische Karten (z.B. OpenstreetMap), in welchen stationäre Objekte wie Häuser, Pflanzen etc. verzeichnet sind, vor. Nach Zuordnung der Senderposition und der vermeintlichen Fahrzeugposition in Relation zu den stationären Objekten in der Umgebung des Senders und des Empfängers wird der Signalpfad ausgehend vom Sender und unter Berücksichtigung der stationären Objekte simuliert. Durch die Berücksichtigung der lokalen Geodaten bei der Simulation des Signalpfads können die physikalischen Empfangssignaleigenschaften durch die Geodaten "geprägt" werden. Unter Prägung wird die Erfassung von Objekten entlang des Pfads zwischen dem Sender und Empfänger verstanden. Da sich bei bewegtem Sender und/oder Empfänger der Pfad verändert, fließen im Laufe der Kommunikation entsprechend unterschiedliche stationäre Objekte in die Kommunikation ein. Die Menge der Objekte, welche sich im Pfad befanden steigt somit. Die Prägung eines Empfangssignals und damit der physikalischen Empfangssignaleigenschaften durch ein Objekt kann sich z.B. in Form einer Signaldämpfung durch das Objekt und/oder Reflexion am Objekt äußern.

Eine allgemeine Kommunikation eines Fahrzeugs mit einem anderen Teilnehmer wird als V2X-Kommunikation (Vehicle-to-X-Kommunikation) oder C2X-Kommunikation (Car-to-X-Kommunikation) bezeichnet, wobei V2X-Nachrichten übermittelt werden. Es wird auch zwischen den unterschiedlichen Teilnehmern unterschieden. Kommunikation zwischen einem Fahrzeug und weiteren Fahrzeugen wird als V2V-Kommunikation (Vehicle-to-Vehicle-Kommunikation) oder C2C-Kommunikation (Car-to-Car-Kommunikation) bezeichnet, wogegen Kommunikation zwischen einem Fahrzeug und Infrastruktur und/oder externen IT-Systemen und/oder externen IT-Services als V2I-Kommunikation (Vehicle-to-Infrastructure-Kommunikation) bezeichnet wird. Kommunikation zwischen einem Fahrzeug und Cloud-Infrastruktur wird hingegen oftmals als V2C-Kommunikation (Vehicle-to-Cloud-Kommunikation) bezeichnet, Kommunikation zwischen einem Fahrzeug und Endgeräten (z.B. Smartphones) anderer Verkehrsteilnehmer (Fußgänger, Radfahrern, etc.) als V2P-Kommunikation (Vehicle-to-Person-Kommunikation oder Vehicle-to-Pedestrian-Kommunikation).

Es ist für die genannten Kommunikationsarten einerseits ein WLAN-ähnlicher IEEE 802.11p Standard definiert, welcher eine Nachrichtenübertragung bei einer Frequenz im Bereich von 5,9 GHz ermöglicht. Andererseits ist zudem ein auf Mobilfunk basierter Ansatz C-ITS für 4G (LTE) und 5G Netze definiert, welcher eine Nachrichtenübertragung im Frequenzbereich von 1,8 bis 3,5 GHz ermöglicht. In den genannten Standards sind sogenannte CAM ("common awareness message") als V2V-Nachrichten definiert, wobei Fahrzeuge unter anderem ihre Position, Richtung und Geschwindigkeit mehrmals pro Sekunde, z.B. 10-mal pro Sekunde, aussenden.

Eine V2X-Nachricht kann grundlegend Information bezüglich des Senders (Fahrzeug, Infrastruktur etc.) selbst und/oder bezüglich anderer Fahrzeuge umfassen, z.B. bezüglich der Position, der Geschwindigkeit oder der (unmittelbar geplanten) Trajektorie der betreffenden Fahrzeuge. Diese Information wurde beispielsweise vorab vom Fahrzeug selbst ermittelt, oder via V2X-Nachricht von anderen Teilnehmern erhalten. Weiters kann die Nachricht auch Information zur Infrastruktur, z.B. bezüglich Position/Anordnung von Straßen, Ampeln, Baustellen etc. umfassen, wobei auch der zugehörige Status (gesperrte Fahrspuren, aktuelle Ampelphasen etc.) als Information enthalten sein kann. Die V2X-Nachricht wird als Broadcast an alle (potentiellen) Empfänger innerhalb der Senderreichweite des Senders (üblicherweise einige zehn bis einige hundert Meter) gesendet. Daraus ergibt sich, dass durch das Fahrzeug nur lokale, d.h. im Bereich der Senderreichweite befindliche und damit auch relevante Information, empfangen wird.

Die durch einen Empfänger eines Fahrzeugs empfangene V2X-Nachricht, d.h. die darin enthalten Information, kann von weiteren Systemen des Fahrzeugs, z.B. von Fahrerassistenzsysteme (ADAS) und/oder teilautomatisierten/vollautomatisierten Fahrsystemen (AD) verwendet und/oder verarbeitet werden. Beispielsweise kann die empfangene Information dazu dienen, Objekte (z.B. Fahrzeuge, Infrastruktur etc.) in der Umgebung des Fahrzeugs zu erkennen, und somit die im Fahrzeug verbauten Sensoren (Video, Radar, Lidar etc.) zu unterstützen. Dies ist insbesondere vorteilhaft, da die V2X-Nachricht auch Information bezüglich Objekte enthalten kann, welche von den im Fahrzeug verbauten Sensoren nicht detektiert werden können. Dies kann auf eine begrenzte Reichweite oder Verdeckungen (non line-of-sight, NLS) der Sensoren oder auch auf störende Umgebungsbedingungen (z.B. Wetterbedingungen) zurückzuführen sein. Mittels V2X-Nachricht empfangene Information kann somit dazu dienen, gemeinsam mit vorhandenen Sensoren ein Lagebild hinsichtlich der Umgebung des Fahrzeugs zu ergänzen. Auch kann die in der V2X-Nachricht enthaltene Information dem Fahrer angezeigt werden, wobei die Information auch aufbereitet werden kann. So kann dem Fahrer beispielsweise via V2X-Nachricht empfangene Information zu Fahrbahneinschränkungen im Bereich von Baustellen angezeigt werden.

Die empfangene V2X-Nachricht kann auch Information enthalten, die von weiteren Teilnehmern (z.B. Fahrzeugen) zur Verfügung gestellt wurde. Durch eine gesamtheitliche Betrachtung der Information von V2X-Nachrichen einer Mehrzahl von Teilnehmern kann ein dichtes Bild des lokalen Szenarios erzeugt werden, womit z.B. kollaboratives Fahren (collective perception message (CPM)) unterstützt werden kann.

Bei der Simulation des Signalpfads kann eine Reflexion und/oder eine Beugung und/oder eine Absorption der V2X-Nachricht an den stationären Objekten berücksichtigt werden. Als Absorption kann vollständige Absorption und/oder Teilabsorption berücksichtigt werden. Weiters können zur Simulation des Signalpfads Methoden wie z.B. Raytracing verwendet werden.

Vorzugsweise wird der simulierte Signalpfad und/oder die simulierte physikalische Empfangssignaleigenschaft mittels physikalischer und/oder stochastischer Modelle und/oder anhand von Näherungsverfahren basierend auf Machine-Learning, vorzugsweise speziell trainierte neuronale Netze, simuliert. Damit kann die für die Simulation benötigte Rechenleistung geringgehalten werden. Es können beispielsweise auch stark optimierte Algorithmen wie das "geometry-based stochastic channel model" (M. Hofer et al., "Evaluation of Vehicle-in-the-Loop Tests for Wireless V2X Communication," 2019 IEEE 90th Vehicular Technology Conference (VTC2019-Fall), Honolulu, HI, USA, 2019, pp. 1-5) verwendet werden.

Erfindungsgemäß umfassen die lokalen Umgebungsgeodaten physikalische Objekteigenschaften der Objekte. Erfindungsgemäß sind direkt signalspezifische physikalische Objekteigenschaften wie Reflexionsindizes und/oder Signaldämpfung der Objekte in den lokalen Umgebungsgeodaten enthalten. Signalspezifische physikalische Objekteigenschaften können insbesondere jene physikalische Objekteigenschaften der Objekte umfassen, welche Kanaleigenschaften für die verwendeten Frequenzen (z.B. 1,8 bis 3,5 oder 5 GHz) beeinflussen. Es können auch lediglich physikalische Objekteigenschaften, wie z.B. der Objekttyp der Objekte (Baum, Busch, Gebäude, Erdhügel etc.) in den lokalen Umgebungsgeodaten enthalten sein. Die signalspezifischen physikalischen Objekteigenschaften können wiederum auf Basis der physikalischen Objekteigenschaften abgeleitet werden.

Vorzugsweise wird ein tatsächlicher Empfangswinkel als zumindest eine physikalische Empfangssignaleigenschaft ermittelt und ein simulierter Empfangswinkel als zumindest eine simulierte physikalische Empfangssignaleigenschaft ermittelt. Ohne Berücksichtigung der lokalen Geodaten bei der Simulation des Signalpfads wird bei einer Reflexion an Objekten ein Signalempfangswinkel nicht korrekt simuliert, da durch Reflexionen der Signalpfad und damit auch der Signalempfangswinkel beeinflusst wird. Zur Ermittlung des tatsächlichen Empfangswinkels kann eine richtungsempfindliche Antenne (DOA - direction of arrival) verwendet werden, beispielsweise eine ESPAR-Antenne (electronically steerable parasitic array radiator).

Vorzugsweise wird eine tatsächliche Empfangssignalstärke als zumindest eine physikalische Empfangssignaleigenschaft ermittelt und eine simulierte Empfangssignalstärke als zumindest eine simulierte physikalische Empfangssignaleigenschaft ermittelt. Würden die lokalen Geodaten nicht berücksichtigt, so könnte nicht unterschieden werden, ob eine geringe Signalstärke aufgrund einer hohen Entfernung zum Fahrzeug, oder aufgrund in der Umgebung von Sender und/oder Empfänger positionierten Objekten auftritt.

Weiters können Polarisation und/oder Doppler-Verschiebung und/oder Frequenz-Dispersion und/oder Signallaufzeiten als physikalische Empfangssignaleigenschaft (und entsprechend als simulierte physikalische Empfangssignaleigenschaft) vorgesehen sein.

Die Senderposition kann direkt in der V2X-Nachricht enthalten sein. Damit muss die Senderposition lediglich aus der V2X-Nachricht ausgelesen werden. Die Senderposition kann aber auch aus anderer in der V2X-Nachricht enthaltenen Information abgeleitet werden.

Vorzugsweise wird die vermeintliche Fahrzeugposition als ungültig erklärt, wenn die zumindest eine simulierte physikalische Empfangssignaleigenschaft von der zumindest einen tatsächlichen physikalischen Empfangssignaleigenschaft um zumindest den Grenzwert abweicht. Somit wird die vermeintliche Fahrzeugposition invalidiert, wenn sie nicht validiert wurde.

Es kann bei einer Ungültigerklärung der vermeintlichen Fahrzeugposition eine Ortungseinheit, welche die vermeintlichen Fahrzeugposition ermittelt, als unzuverlässig markiert werden.

Weiters kann bei einer Ungültigerklärung der vermeintlichen Fahrzeugposition ein Satellitennavigationssystem, welches der Ortungseinheit ein Positionssignal zur Ermittlung der vermeintlichen Fahrzeugposition zur Verfügung stellt, als unzuverlässig markiert werden. Weiters kann eine Meldung bezüglich der Unzuverlässigkeit des GNSS-Senders oder bezüglich eines Verdachts, dass GNSS Signale derart modifiziert bzw. überlagert wurden, dass es zu falschen Positionsaussagen führen kann, erfolgen, welche beispielsweise als Broadcast an die Fahrzeuge in der Umgebung und/oder eine zentrale Stelle (z.B. eine Verkehrsleitzentrale) gesendet wird.

Vorteilhafterweise wird die Validierung mehrfach durchgeführt. Da Sender und/oder Empfänger in Bewegung sind und somit mit der Zeit eine steigende Fläche überstreichen und somit der Sendepfad durch eine zunehmende Anzahl an stationären Objekten beeinflusst wird, steigt die oben beschriebene "Prägung" der physikalischen Empfangssignaleigenschaft und somit die Aussagekraft der Validierung.

Es kann unter Verwendung der lokalen Umgebungsgeodaten und der tatsächlichen physikalischen Empfangssignaleigenschaft der V2X-Nachricht die tatsächliche Fahrzeugposition bestimmt werden und mit der vermeintlichen Fahrzeugposition verglichen werden. Damit wird die tatsächliche Fahrzeugposition geschätzt, z.B. indem der tatsächliche Signalpfad auf Basis der Empfangsrichtung und der Empfangsfeldstärke der V2X-Nachricht sowie den lokalen Umgebungsgeodaten simuliert wird. In Folge kann die tatsächliche Fahrzeugposition mit der vermeintlichen Fahrzeugposition verglichen werden, um eine zusätzliche Validierung zu ermöglichen, falls tatsächliche Fahrzeugposition und vermeintliche Fahrzeugposition um weniger als einen entsprechenden Positionsabweichungsgrenzwert abweichen.

Vorzugsweise ist die V2X-Nachricht eine V2V-Nachricht, vorzugsweise eine Common-Awareness-Message.

Die Fahrzeugposition kann bekanntermaßen im Fahrzeug verwendet werden, um teil- oder vollautomatisiertes Fahren durchzuführen. Wurde die Fahrzeugposition validiert, so kann diese für die Funktion des teil- oder vollautomatisierten Fahrens verwendet werden. Wird die Fahrzeugposition jedoch als invalide erklärt, so wird diese nicht für die Funktion des automatisierten Fahrens verwendet. Ist weitere vorhandene Information (z.B. von vorhandener Sensorik ermittelte Information) nicht ausreichend, um die Funktion des automatisierten Fahrens sicher auszuführen, so kann diese Funktion in weiterer Folge deaktiviert werden. In diesem Fall kann dem Fahrer die volle Kontrolle über das Fahrzeug übergeben werden oder ein sicherer Halt des Fahrzeugs initiiert werden. Es kann auch der Fall eintreten, dass die weitere vorhandene Information zwar nicht für die vollständige Funktion des automatisierten Fahrens ausreichend ist, jedoch eine eingeschränkte Funktion erlaubt, z.B. eine verminderte Geschwindigkeit.

Weiters kann die Fahrzeugposition im Fahrzeug angezeigt werden und weiters ein Vermerk bezüglich der Validierung der Fahrzeugposition angezeigt werden. So wird dem Fahrer einerseits die Fahrzeugposition mitgeteilt und andererseits ob diese Fahrzeugposition validiert wurde.

Gleichermaßen kann die Fahrzeugposition in einem System des Fahrzeugs (z.B. ein Unfalldatenschreiber - auch Blackbox genannt, Fahrdatenschreiber etc.) gespeichert werden und weiters ein Vermerk bezüglich der Validierung Fahrzeugposition gespeichert werden.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1: einen beispielhaften schematischen Aufbau einer Validierungsvorrichtung
- Fig.2: einen direkten simulierten Signalpfad einer V2X-Nachricht,
- Fig.3: einen an einem Objekt reflektierten simulierten Signalpfad einer V2X-Nachricht,
- Fig.4: einen an zwei Objekten reflektierten simulierten Signalpfad einer V2X-Nachricht.

Es ist an einem Fahrzeug eine Ortungseinheit 16 vorgesehen, welche ausgestaltet ist, die vermeintliche Fahrzeugposition P1 des Fahrzeugs zu bestimmen. Die Ortungseinheit 16 erhält beispielsweise ein Positionssignal von einem Satellitennavigationssystem zur Ermittlung der vermeintlichen Fahrzeugposition P1. Es kann der Fall eintreten, dass die von der Ortungseinheit 16 vorgegebene vermeintliche Fahrzeugposition P1 falsch ist. Eine falsche vermeintliche Fahrzeugposition P1 kann gefälscht (z.B. aufgrund von GNSS-Spoofings), oder auch unbeabsichtigt inkorrekt sein.

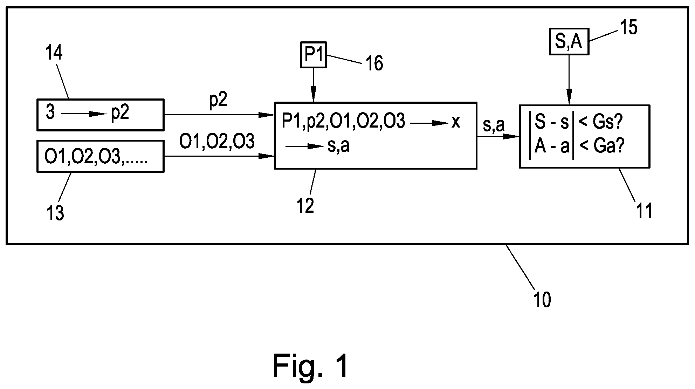

Es ist zur Validierung der vermeintlichen Fahrzeugposition P1 am Fahrzeug eine Validierungsvorrichtung 10 vorgesehen, wie sie in Fig 1 schematisch dargestellt ist. Es wird eine V2X-Nachricht 3 von einem Sender 2 an einen Empfänger 1 des Fahrzeugs übermittelt. Als Sender 2 kann ein Fahrzeug (V2V-Nachricht), aber auch Infrastruktur, ein externes IT-System, ein externer IT-Service (V2I-Nachricht), ein anderer Verkehrsteilnehmer (V2P-Nachricht), ein Cloud-Service (V2C-Nachricht) etc. vorgesehen sein. Die V2X-Nachicht 3 beinhaltet direkt eine Senderposition p2 des Senders 2 oder enthält Information, aus denen die Senderposition p2 ableitbar ist. Für die Kommunikation mit einem Cloud-Service (V2C-Nachricht) kann die Position des aktiven Funkmasts (z.B. ein Mobilfunk Sendemast bei C-ITS), als Senderposition p2 angesehen werden. Es ist eine Extraktionseinheit 14 vorgesehen, welche dazu dient, die Senderposition p2 aus der V2X-Nachicht 3 zu ermitteln. Es wird davon ausgegangen, dass diese Senderposition p2 korrekt ist.

Weiters ist eine Analyseeinheit 15 vorgesehen, die ausgestaltet ist, beim Empfang der V2X-Nachricht 3 zumindest eine tatsächliche physikalische Empfangssignaleigenschaft der V2X-Nachricht 3, z.B. eine tatsächliche Empfangssignalstärke S und/oder einen tatsächlichen Empfangssignalwinkel A, zu ermitteln.

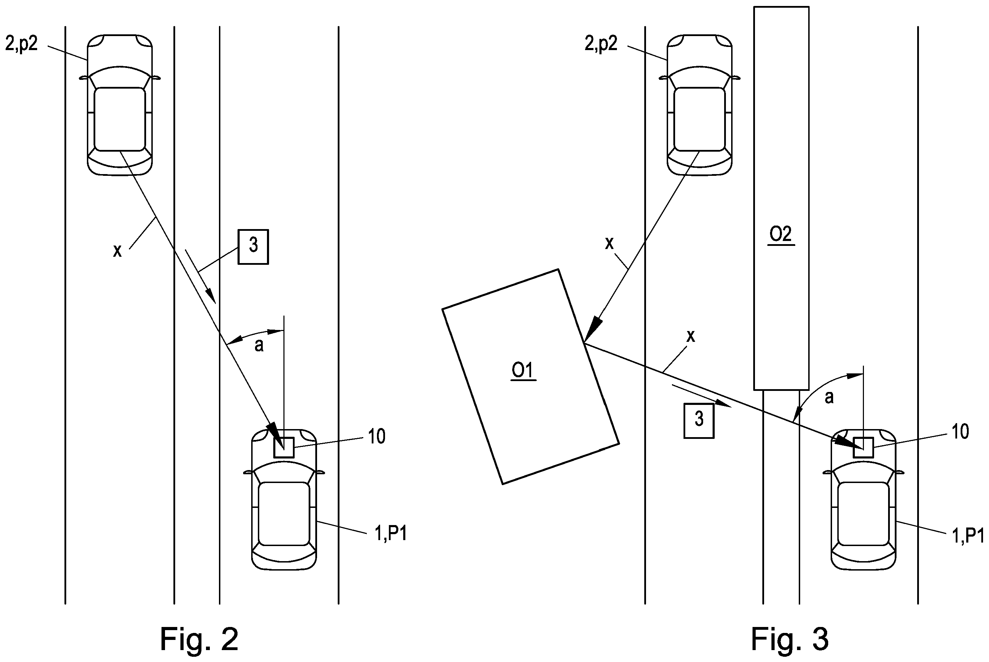

Erfindungsgemäß ist eine Geodateneinheit 13 vorgesehen, welche ausgestaltet ist, lokale Umgebungsgeodaten zur Verfügung zu stellen. Die Umgebungsgeodaten umfassen Positionen von stationären Objekten O1, O2, O3, O4 beispielsweise in Form von 2D-Karten, oder 3D-Karten. Als Geodateneinheit 13 kann ein lokaler Speicher mit Positionen der stationären Objekte O1, O2, O3, O4 und/oder eine Empfangseinheit zum Empfang der Position der stationären Objekte O1, O2, O3, O4 vorgesehen sein. Eine beispielhafte Positionierung von stationären Objekten O1, O2, O3, O4 ist in den Fig. 2 bis 4 dargestellt und wird weiter unten beschrieben.

Zudem ist erfindungsgemäß eine Simulationseinheit 12 vorgesehen, welche von der Extraktionseinheit 14 die Senderposition p2 des Senders 2 zur Verfügung gestellt bekommt.

Weiters bekommt die Simulationseinheit 12 von der Geodateneinheit 13 die Umgebungsgeodaten O1, O2, O3, O4 zur Verfügung gestellt. Die Simulationseinheit 12 simuliert den Signalpfad x der V2X-Nachricht 3 von der Senderposition p2 zur vermeintlichen Fahrzeugposition P1 unter Berücksichtigung der stationären Objekte O1, O2, O3, O4. Es wird weiters aus dem simulierten Signalpfad x und der vermeintlichen Fahrzeugposition P1 zumindest eine simulierte physikalische Empfangssignaleigenschaft, z.B. eine simulierte Empfangssignalstärke s und/oder ein simulierter Empfangssignalwinkel a, bestimmt. Die simulierte Empfangssignalstärke s ist abhängig von der Länge des simulierten Signalpfads x und den Objekttypen und/oder Objekteigenschaften der entlang des Signalpfads x positionierten Objekten O1, O2, O3, O4. Beispielsweise haben Bäume eine signaldämpfende Wirkung. Der simulierte Empfangssignalwinkel a ergibt sich aus der Orientierung des am Empfänger 1 auftreffenden simulierten Signalpfads x.

Um zu verifizieren, dass der simulierte Signalpfad x dem tatsächlichen Signalpfad entspricht, ist eine Validierungseinheit 11 vorgesehen, welche die zumindest eine simulierte physikalische Empfangssignaleigenschaft von einer Simulationseinheit 12 und die zumindest eine tatsächliche Signaleigenschaft von der Analyseeinheit 15 erhält. Die zumindest eine simulierte physikalische Empfangssignaleigenschaft wird mit der zumindest einen tatsächlichen Signaleigenschaft verglichen. Weicht die zumindest eine simulierte physikalische Empfangssignaleigenschaft von der zumindest einen tatsächlichen physikalischen Empfangssignaleigenschaft um weniger als ein Grenzwert G ab, so wird die V2X-Nachricht 3 validiert. Es wird somit von einer korrekten physikalischen Empfangssignaleigenschaft (d.h. eine Abweichung um weniger als dem Grenzwert G von der tatsächlichen Signaleigenschaft) darauf geschlossen, dass der simulierte Signalpfad x korrekt ist, womit wiederum darauf rückgeschlossen wird, dass die vermeintliche Fahrzeugposition P1 korrekt ist, d.h. der tatsächlichen Fahrzeugposition entspricht. Es kann analog von einer inkorrekten physikalischen Empfangssignaleigenschaft (d.h. einer Abweichung um zumindest den Grenzwert G von der tatsächlichen Signaleigenschaft) darauf geschlossen, dass der simulierte Signalpfad x inkorrekt ist, womit wiederum darauf rückgeschlossen wird, dass die vermeintliche Fahrzeugposition P1 inkorrekt ist, d.h. der tatsächlichen Fahrzeugposition nicht entspricht.

Es kann eine simulierte physikalische Empfangssignaleigenschaft mit einer tatsächlichen physikalischen Empfangssignaleigenschaft verglichen werden, oder eine Mehrzahl an simulierten physikalischen Empfangssignaleigenschaften mit einer Mehrzahl an tatsächlichen physikalischen Empfangssignaleigenschaften verglichen werden, wobei jeweils Grenzwerte vorgesehen sein können. In Fig. 1 ist beispielhaft einerseits ein Vergleich der simulierten Empfangssignalstärke s mit der tatsächlichen Empfangssignalstärke S und andererseits ein Vergleich des simulierten Empfangswinkels a mit dem tatsächlichen Empfangswinkel A vorgesehen. Vorzugsweise strahlt der Sender 2 die V2X-Nachricht 3 omnidirectional, d.h. in der zweidimensionalen Darstellung in alle Richtungen der Ebene parallel zu einer Fahrbahnebene gleichmäßig, aus. Es wird die Differenz aus der simulierten Empfangssignalstärke s und der tatsächlichen Empfangssignalstärke S berechnet und der Betrag der Differenz mit einem Signalstärkengrenzwert Gs verglichen: |S - s|<Gs. Weiters wird die Differenz aus dem simulierten Empfangswinkel a und dem tatsächlichen Empfangswinkel A berechnet und der Betrag der Differenz mit einem Winkelgrenzwert Ga verglichen: |A - a|<Ga. Bei einer Validierung des Empfangswinkels A wird natürlich berücksichtigt, dass 0° 360° entspricht. Somit wird beispielsweise bei einem Empfangswinkel A von 359° und einem simulierten Empfangswinkel a von 1° eine Differenz von 2° und nicht von 358° bestimmt. Durch die Betragsbildung der Differenz ist für eine positive Abweichung und eine negative Abweichung derselbe Grenzwert vorgesehen, es kann natürlich auch für eine positive Abweichung ein Vergleich mit einem oberen Grenzwert und für eine negative Abweichung ein Vergleich mit einem unteren Grenzwert durchgeführt werden.

Es ist in den Fig. 2, 3 und 4 jeweils eine vermeintliche Fahrzeugposition P1 und der simulierte Signalpfad x dargestellt. Würde sich das Fahrzeug 1 tatsächlich an der Fahrzeugposition P1 befinden, so würde der tatsächliche Signalpfad auch dem simulierten Signalpfad x entsprechen. Der Sender 2 wird in den Figuren nur beispielhaft als Fahrzeug repräsentiert, womit die V2X-Nachricht 3 eine V2V-Nachricht darstellt.

In Fig. 2 ist angenommen, dass sich kein Objekt O1, O2, O3, O4 zwischen dem Sender 2 und dem Empfänger 1 befindet, womit die V2X-Nachricht 3 entlang eines direkten simulierten Signalpfads x vom Sender 2 an den Empfänger 1 übertragen wird. Damit ergibt sich für die empfangene V2X-Nachricht 3 ein simulierter Empfangswinkel a und eine simulierte Empfangssignalstärke s (nicht eingezeichnet). Die Darstellung in Fig. 2 ist natürlich nur theoretischer Natur, da eine vollständige Abwesenheit von Objekten O1, O2, O3, O4 höchst unwahrscheinlich ist.

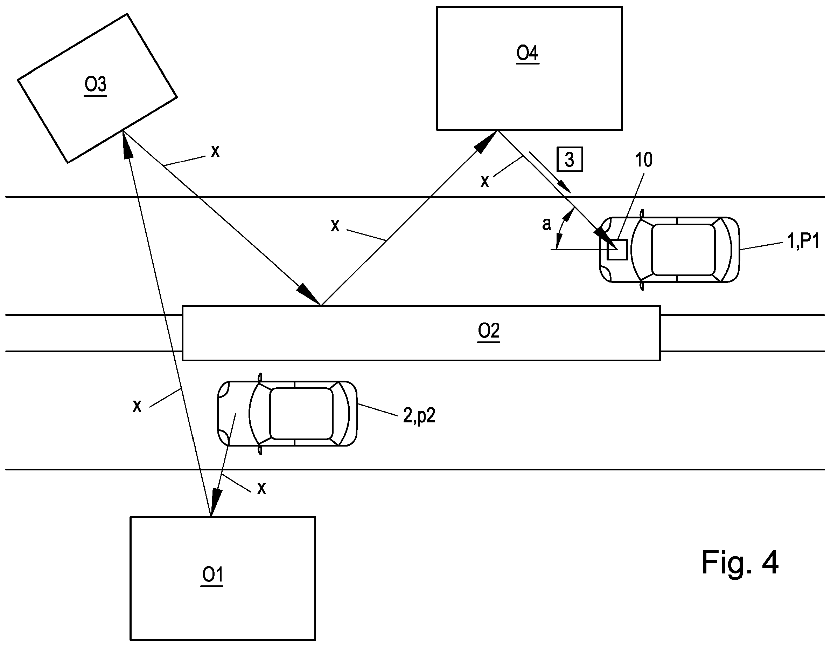

Fig. 3 zeigt die gleiche relative Positionierung des Senders 2 und Empfängers 1, wie Fig. 2. Es tritt hier jedoch ein anderer simulierter Signalpfad x auf, was auf die Position des zweiten Objekts O2 zwischen dem Sender 2 und dem Fahrzeug 1 zurückzuführen ist, welcher einen direkten simulierten Signalpfad x, wie er in Fig. 1 dargestellt ist, verhindert. Es ist jedoch ein erstes Objekt O1 vorhanden, an welchem die V2X-Nachricht 3 reflektiert wird. Der simulierte Signalpfad x führt also vom Sender 2 zum ersten Objekt O1, an welchem die V2X-Nachricht 3 reflektiert wird, und weiters zum Empfänger 1. Damit ergibt sich in Fig. 3 ein anderer (hier stumpferer) simulierter Empfangswinkel a der V2X-Nachricht gegenüber Fig. 2. Ebenso tritt in Fig. 4 gegenüber Fig. 2, eine andere (hier verringerte) simulierte Empfangssignalstärke s auf (nicht eingezeichnet), was auf den längeren simulierten Signalpfad x zurückzuführen ist.

Fig. 4 zeigt ebenso die gleiche relative Anordnung des Senders 2 und Empfängers 1, wobei wiederum ein anderer simulierter Signalpfad x auftritt, da die V2X-Nachricht 3 mehrfach reflektiert wird. So führt der simulierte Signalpfad x der V2X-Nachricht 3 vom Sender 2 über eine Reflexion am ersten Objekt 1 zu einer Reflexion am dritten Objekt O3 und über weitere Reflexionen am zweiten Objekt O2 und vierten Objekt O4 zum Empfänger 1. Somit ergibt sich in Fig. 4 gegenüber Fig. 2 und 3 ein gänzlich anderer simulierter Empfangswinkel a der V2X-Nachricht 3. Zudem tritt aufgrund des wiederum längeren simulierten Signalpfads x gegenüber den Fig. 1 und 2 eine weiter verringerte simulierte Empfangssignalstärke S auf (nicht eingezeichnet).

Es ist somit ersichtlich, dass die physikalischen Empfangssignaleigenschaften stark von den lokalen Objekten O1, O2, O3, O4 in der Umgebung des Senders 2 und des Empfängers 1 abhängen. Es kann somit anhand der Senderposition p2 und den lokalen Geodaten sowie der vermeintlichen Fahrzeugposition P1 ein Signalpfad x simuliert werden, woraus wiederum physikalische Empfangssignaleigenschaften simuliert werden können. Die tatsächlichen Signaleigenschaften werden ermittelt und mit den simulierten physikalischen Empfangssignaleigenschaften verglichen, um zu ermitteln ob der simulierte Signalpfad x mit dem tatsächlichen Signalpfad übereinstimmt. Ist dem der Fall, so kann davon ausgegangen werden, dass die vermeintliche Fahrzeugposition P1 der tatsächlichen Fahrzeugposition entspricht, womit die V2X-Nachricht 3 validiert werden kann.

Der Signalpfad x ist in den Figuren zur besseren Darstellung stark vereinfach dargestellt, wobei neben einfachen Abschirmungseffekten lediglich eine einfache Reflexion unter der Voraussetzung eines Ausfallswinkels entsprechend des Einfallswinkels berücksichtigt wird. Es können bei der Simulation des Signalpfads x neben den Effekten der Reflexion und Abschirmung weitere Effekte berücksichtigt werden, beispielsweise auch Beugung etc. Es können bei der Simulation weiters auch mehrere Signalpfade x berücksichtigt werden, wobei wiederum Effekte wie (unterschiedliche) Signallaufzeiten etc. berücksichtigt werden können.

Die Extraktionseinheit 14, Analyseeinheit 15, Geodateneinheit 13, Simulationseinheit 12, Validierungseinheit 11 und Ortungseinheit 16 können als mikroprozessorbasierte Hardware ausgeführt sein, beispielsweise als ein Computer oder Digitaler Signalprozessor (DSP) auf welcher entsprechende Software zur Durchführung der jeweiligen Funktion ausgeführt wird. Die Extraktionseinheit 14, Analyseeinheit 15, Geodateneinheit 13, Simulationseinheit 12, Validierungseinheit 11 und Ortungseinheit 16 können auch jeweils eine integrierte Schaltung sein, beispielsweise eine anwendungsspezifische integrierte Schaltung (ASIC) oder ein Field Programmable Gate Array (FPGA), auch mit einem Mikroprozessor. Die Extraktionseinheit 14, Analyseeinheit 15, Geodateneinheit 13, Simulationseinheit 12, Validierungseinheit 11 und Ortungseinheit 16 können aber auch als analoger Schaltkreis oder analoger Computer implementiert sein. Auch Mischformen sind denkbar. Ebenso ist es möglich, dass verschiedene Funktionen als Software auf derselben Hardware ausgeführt sind.

## Patentansprüche

1. Verfahren zur Validierung einer vermeintlichen Fahrzeugposition (P1) eines Fahrzeugs, indem ein Empfänger (1) des Fahrzeugs eine durch einen Sender (2) gesendete V2X-Nachricht (3) empfängt und aus der V2X-Nachricht eine Senderposition (p2) des Senders (2) ermittelt, wobei lokale Umgebungsgeodaten, umfassend eine Positionierung einer Anzahl stationärer Objekte (O1, O2, O3, O4) in Form von zwei- und/oder dreidimensionalen Karten und physikalische Objekteigenschaften, die Reflexionseigenschaften und/oder Dämpfungseigenschaften der stationären Objekte (O1, O2, O3, O4) umfassen, zur Verfügung gestellt werden, wobei ausgehend von der Senderposition (p2), unter Berücksichtigung der lokalen Umgebungsgeodaten und der vermeintlichen Fahrzeugposition (P1) ein Signalpfad (x) der V2X-Nachricht (3) simuliert wird, wobei bei der Simulation des Signalpfads (x) eine Reflexion und/oder eine Beugung und/oder eine Absorption der V2X-Nachricht (3) an den stationären Objekten (O1, O2, O3, O4) berücksichtigt wird und aus dem simulierten Signalpfad (x) und der vermeintlichen Fahrzeugposition (P1) zumindest eine simulierte physikalische Empfangssignaleigenschaft ermittelt wird, wobei beim Empfang der V2X-Nachricht zumindest eine tatsächliche physikalische Empfangssignaleigenschaft der V2X-Nachricht (3) ermittelt wird, **und** wobei die vermeintliche Fahrzeugposition (P1) validiert wird, sofern die zumindest eine simulierte physikalische Empfangssignaleigenschaft von der zumindest einen tatsächlichen physikalischen Empfangssignaleigenschaft um weniger als einen Grenzwert (G) abweicht.

2. Verfahren nach Anspruch 1, **dadurch gekennzeichnet, dass** ein tatsächlicher Empfangswinkel (A) als zumindest eine physikalische Empfangssignaleigenschaft ermittelt wird und dass ein simulierter Empfangswinkel (a) als zumindest eine simulierte physikalische Empfangssignaleigenschaft ermittelt wird.

3. Verfahren nach einem der Ansprüche 1 bis 2, **dadurch gekennzeichnet, dass** eine tatsächliche Empfangssignalstärke (S) als zumindest eine physikalische Empfangssignaleigenschaft ermittelt wird, **und dass** eine simulierte Empfangssignalstärke (s) als zumindest eine simulierte physikalische Empfangssignaleigenschaft ermittelt wird.

4. Verfahren nach einem der Ansprüche 1 bis 4, **dadurch gekennzeichnet, dass** die Senderposition (p2) direkt in der V2X-Nachricht (3) enthalten ist.

5. Verfahren nach einem der Ansprüche 1 bis 5, **dadurch gekennzeichnet, dass** die Senderposition (p2) aus in der V2X-Nachricht (3) enthaltenen Information abgeleitet wird.

6. Verfahren nach einem der Ansprüche 1 bis 6, **dadurch gekennzeichnet, dass** die vermeintliche Fahrzeugposition (P1) als ungültig erklärt wird, wenn die zumindest eine simulierte physikalische Empfangssignaleigenschaft von der zumindest einen tatsächlichen physikalischen Empfangssignaleigenschaft um zumindest den Grenzwert (G) abweicht.

7. Verfahren nach Anspruch 6, **dadurch gekennzeichnet, dass** bei einer Ungültigerklärung der vermeintlichen Fahrzeugposition (P1) eine Ortungseinheit (16), welche die vermeintlichen Fahrzeugposition (P1) ermittelt, als unzuverlässig markiert wird.

8. Verfahren nach Anspruch 6 oder 7, **dadurch gekennzeichnet, dass** bei einer Ungültigerklärung der vermeintlichen Fahrzeugposition (P1) ein Satellitennavigationssystem, welches der Ortungseinheit (16) ein Positionssignal zur Ermittlung der vermeintlichen Fahrzeugposition (P1) zur Verfügung stellt, als unzuverlässig markiert wird.

9. Verfahren nach einem der Ansprüche 1 bis 8, **dadurch gekennzeichnet, dass** die Validierung mehrfach durchgeführt wird.

10. Verfahren nach einem der Ansprüche 1 bis 9, **dadurch gekennzeichnet, dass** unter Verwendung der lokalen Umgebungsgeodaten und tatsächlichen physikalischen Empfangssignaleigenschaften der V2X-Nachricht (2) die tatsächliche Fahrzeugposition bestimmt wird und mit der vermeintlichen Fahrzeugposition (P1) des Senders (2) verglichen wird.

11. Verfahren nach einem der Ansprüche 1 bis 10, **dadurch gekennzeichnet, dass** eine die V2X-Nachricht (3) eine V2V-Nachricht, vorzugsweise eine Common-Awareness-Message, ist.

12. Verfahren nach einem der Ansprüche 1 bis 11, **dadurch gekennzeichnet, dass** der simulierte Signalpfad (x) und/oder die simulierte physikalische Empfangssignaleigenschaft mittels physikalischer und/oder stochastischer Modelle und/oder anhand von Näherungsverfahren basierend auf Machine-Learning, vorzugsweise speziell trainierte neuronale Netze, simuliert wird.

13. Validierungsvorrichtung (10) zur Validierung einer durch eine Ortungseinheit (16) eines Fahrzeugs vorgegebenen vermeintlichen Fahrzeugposition (P1), wobei eine Extraktionseinheit (14) vorgesehen ist, welche ausgestaltet ist, bei Empfang einer von einem Sender (2) gesendeten und durch einen Empfänger (1) des Fahrzeugs empfangenen V2X-Nachricht (3) aus der V2X-Nachricht (3) eine Senderposition (p2) des Senders (2) zu ermitteln, wobei eine Analyseeinheit (15) vorgesehen ist, welche ausgestaltet ist, beim Empfang der V2X-Nachricht (3) zumindest eine tatsächliche physikalische Empfangssignaleigenschaft (S, A) zu ermitteln, wobei eine Geodateneinheit (13) vorgesehen ist, welche ausgestaltet ist, lokale Umgebungsgeodaten, umfassend eine Positionierung einer Anzahl an stationären Objekten (O1, O2, O3, O4) in Form von zwei- und/oder dreidimensionalen Karten und physikalische Objekteigenschaften, die Reflexionseigenschaften und/oder Dämpfungseigenschaften der stationären Objekte (O1, O2, O3, O4) umfassen, zur Verfügung zu stellen, wobei eine Simulationseinheit (12) vorgesehen ist, welche mit der Extraktionseinheit (14) und der Geodateneinheit (13) verbunden und ausgestaltet ist, unter Verwendung der Senderposition (p2), den lokalen Umgebungsgeodaten und der vermeintlichen Fahrzeugposition (P1) einen Signalpfad (x) der V2X-Nachricht (3) zu simulieren, bei der Simulation des Signalpfads (x) eine Reflexion und/oder eine Beugung und/oder eine Absorption der V2X-Nachricht (3) an den stationären Objekten (O1, O2, O3, O4) zu berücksichtigen und aus dem simulierten Signalpfad (x) und der vermeintlichen Fahrzeugposition (P1) zumindest eine simulierte physikalische Empfangssignaleigenschaft zu ermitteln, **und** wobei eine Validierungseinheit (11) vorgesehen ist, welche mit der Simulationseinheit (12) und mit der Analyseeinheit (15) verbunden und ausgestaltet ist, die vermeintliche Fahrzeugposition (P1) zu validieren, sofern die zumindest eine simulierte physikalische Empfangssignaleigenschaft von der zumindest einen tatsächlichen physikalischen Empfangssignaleigenschaft um weniger als ein Grenzwert (G) abweicht.

## Claims

1. Method for validating an assumed position (P1) of a vehicle, wherein a receiver (1) of the vehicle receives a V2X message (3) transmitted by a transmitter (2) and determines a transmitter position (p2) of the transmitter (2) from the V2X message, wherein local environmental geodata are made available, the local environmental geodata comprising a positioning of a number of stationary objects (O1, O2, O3, O4) in the form of two- and/or three-dimensional maps and physical object properties, which comprises reflection properties and/or attenuation properties of the stationary objects, wherein, starting from the transmitter position (p2) of the transmitter (2), a signal path (x) of the V2X message (3) is simulated taking into account the environmental geodata and the assumed vehicle position (P1), wherein a reflection and/or a diffraction and/or an absorption of the V2X message at the stationary objects (O1, O2, O3, O4) is taken into account during a simulation of the signal path (x) and at least one simulated physical received signal property is determined from the simulated signal path (x) and the assumed vehicle position (P1), wherein at least one actual physical received signal property of the V2X message (3) is determined upon reception of the V2X message, and wherein the assumed the assumed vehicle position (P1) is validated, if the at least one simulated physical received signal property differs from the at least one actual physical received signal property by less than a limit value (G).

2. Method according to claim 1, **characterized in that** an actual reception angle (A) is determined as at least one physical received signal property **and in that** a simulated reception angle (a) is determined as at least one simulated physical received signal property.

3. Method according to any one of claims 1 to 2, **characterized in that** an actual received signal strength (S) is determined as at least one physical received signal property, **and in that** a simulated received signal strength (s) is determined as at least one simulated physical received signal property.

4. Method according to any one of claims 1 to 3, **characterized in that** the transmitter position (p2) is directly contained in the V2X message (3).

5. Method according to any one of Claims 1 to 4, **characterized in that** the transmitter position (p2) is derived from information contained in the V2X message (3).

6. Method according to any one of Claims 1 to 5, **characterized in that** the assumed vehicle position (P1) is declared invalid, if the at least one simulated physical received signal property differs from the at least one actual physical received signal property by at least the limit value (G).

7. Method according to Claim 6, **characterized in that,** a position-determination unit (16) which is determining the assumed vehicle position (P1) will be marked as unreliable, if the assumed vehicle position (P1) is declared invalid.

8. Method according to Claims 6 or 7, **characterized in that,** a satellite navigation system which is providing a position signal to the position-determination unit (16) for determining the assumed vehicle position (P1) will be marked as unreliable, if the assumed vehicle position (P1) is declared invalid.

9. Method according to any one of Claims 1 to 8, **characterized in that** the validation is carried out multiple times.

10. Method according to any one of Claims 1 to 9, **characterized in that** the actual vehicle position is determined using the local environmental geodata and actual physical received signal properties of the V2X message (2) and is compared with the assumed vehicle position (P1) of the transmitter (2).

11. Method according to any one of Claims 1 to 10, **characterized in that** the V2X message (3) is a V2V message, preferably a common awareness message.

12. Method according to any one of Claims 1 to 11, **characterized in that** the simulated signal path (x) and/or the simulated physical received signal property is simulated by using physical and/or stochastic models and/or by using approximation methods based on machine learning, preferably specially trained neural networks.

13. Validation device (10) for validating an assumed vehicle position (P1) specified by a position-determination unit (16) of a vehicle, wherein
an extraction unit (14) is provided, which is designed to determine a transmitter position (p2) of the transmitter (2) from the V2X message (3), upon reception of a V2X message (3) transmitted by a transmitter (2) and received by a receiver (1) of the vehicle,
wherein an analysis unit (15) is provided, which is designed to determine at least one actual physical received signal property (S, A) when the V2X message (3) is received, wherein a geodata unit (13) is provided, which is designed to provide local environmental geodata comprising a positioning of a number of stationary objects (O1, O2, O3, O4) in the form of two- and/or three-dimensional maps and physical object properties, which comprises reflection properties and/or attenuation properties of the stationary objects,
wherein a simulation unit (12) is provided, which is connected to the extraction unit (14) and to the geodata unit (13) and which is designed to simulate a signal path (x) of the V2X message (3) using the transmitter position (p2), the local environmental geodata and the assumed vehicle position (P1), to take into account a reflection and/or a diffraction and/or an absorption of the V2X message at the stationary objects (O1, O2, O3, O4) during the simulation of the signal path (x) and to determine at least one simulated physical received signal property from the simulated signal path (x) and the assumed vehicle position (P1), and wherein a validation unit (11) is provided, which is connected to the simulation unit (12) and to the analysis unit (15) and which is designed to validate the assumed vehicle position (P1), if the at least one simulated physical received signal property differs from the at least one actual physical received signal property by less than a limit value (G).

## Revendications

1. Procédé permettant la validation d'une position de véhicule (P1) présumée d'un véhicule par le fait qu'un récepteur (1) du véhicule reçoit un message V2X (3) émis par un émetteur (2) et détermine une position d'émetteur (p2) de l'émetteur (2) à partir du message V2X, dans lequel des données géographiques d'environnement locales comprenant un positionnement d'un certain nombre d'objets stationnaires (O1, O2, O3, O4) sous forme de cartes bidimensionnelles et/ou tridimensionnelles, et des propriétés d'objet physiques qui comprennent des propriétés de réflexion et/ou des propriétés d'amortissement des objets stationnaires (O1, O2, O3, O4), sont mises à disposition, dans lequel un trajet de signal (x) du message V2X (3) est simulé à partir de la position d'émetteur (p2) en tenant compte des données géographiques d'environnement locales et de la position de véhicule (P1) présumée, dans lequel une réflexion et/ou une diffraction et/ou une absorption du message V2X (3) sur les objets stationnaires (O1, O2, O3, O4) sont prises en compte lors de la simulation du trajet de signal (x) et au moins une propriété de signal de réception physique simulée est déterminée à partir du trajet de signal (x) simulé et de la position de véhicule (P1) présumée, dans lequel, lors de la réception du message V2X, au moins une propriété de signal de réception physique réelle du message V2X (3) est déterminée, et dans lequel la position de véhicule (P1) présumée est validée pour autant que l'au moins une propriété de signal de réception physique simulée diffère de l'au moins une propriété de signal de réception physique réelle de moins d'une valeur limite (G).

2. Procédé selon la revendication 1, **caractérisé en ce qu'**un angle de réception réel (A) est déterminé en tant qu'au moins une propriété de signal de réception physique, **et en ce qu'**un angle de réception simulé (a) est déterminé en tant qu'au moins une propriété de signal de réception physique simulée.

3. Procédé selon l'une des revendications 1 à 2, **caractérisé en ce qu'**une intensité de signal de réception réelle (S) est déterminée en tant qu'au moins une propriété de signal de réception physique, **et en ce qu'**une intensité de signal de réception simulée (s) est déterminée en tant qu'au moins une propriété de signal de réception physique simulée.

4. Procédé selon l'une des revendications 1 à 3, **caractérisé en ce que** la position d'émetteur (p2) est directement contenue dans le message V2X (3).

5. Procédé selon l'une des revendications 1 à 4, **caractérisé en ce que** la position d'émetteur (p2) est déduite d'informations contenues dans le message V2X (3).

6. Procédé selon l'une des revendications 1 à 5, **caractérisé en ce que** la position de véhicule (P1) présumée est déclarée invalide si l'au moins une propriété de signal de réception physique simulée diffère de l'au moins une propriété de signal de réception physique réelle d'au moins la valeur limite (G).

7. Procédé selon la revendication 6, **caractérisé en ce que,** en cas d'invalidation de la position de véhicule (P1) présumée, une unité de localisation (16), qui détermine la position de véhicule (P1) présumée est marquée comme non fiable.

8. Procédé selon la revendication 6 ou 7, **caractérisé en ce que,** en cas d'invalidation de la position de véhicule (P1) présumée, un système de navigation par satellite qui fournit à l'unité de localisation (16) un signal de position pour la détermination de la position de véhicule (P1) présumée, est marqué comme non fiable.

9. Procédé selon l'une des revendications 1 à 8, **caractérisé en ce que** la validation est effectuée plusieurs fois.

10. Procédé selon l'une des revendications 1 à 9, **caractérisé en ce que,** à l'aide des données géographiques d'environnement locales et des propriétés de signal de réception physiques réelles du message V2X (2), la position de véhicule réelle est établie et comparée à la position de véhicule (P1) présumée de l'émetteur (2).

11. Procédé selon l'une des revendications 1 à 10, **caractérisé en ce que** l'un des messages V2X (3) est un message V2V, de préférence un message de sensibilisation commun.

12. Procédé selon l'une des revendications 1 à 11, **caractérisé en ce que** le trajet de signal (x) simulé et/ou la propriété de signal de réception physique simulée est simulé(e) à l'aide de modèles physiques et/ou stochastiques et/ou à l'aide de procédés d'approximation basés sur l'apprentissage automatique, de préférence des réseaux neuronaux spécialement entraînés.

13. Dispositif de validation (10) pour la validation d'une position de véhicule (P1) présumée prédéfinie par une unité de localisation (16) d'un véhicule, dans lequel une unité d'extraction (14) est prévue, laquelle est conçue pour déterminer, lors de la réception d'un message V2X (3) émis par un émetteur (2) et reçu par un récepteur (1) du véhicule, une position d'émetteur (p2) de l'émetteur (2) à partir du message V2X (3), dans lequel une unité d'analyse (15) est prévue, laquelle est conçue, lors de la réception du message V2X (3), pour déterminer au moins une propriété de signal de réception (S, A) physique réelle, dans lequel une unité de données géographiques (13) est prévue, laquelle est conçue pour mettre à disposition des données géographiques d'environnement locales comprenant un positionnement d'un certain nombre d'objets stationnaires (O1, O2, O3, O4) sous forme de cartes bidimensionnelles et/ou tridimensionnelles et des propriétés d'objet physiques, qui comprennent des propriétés de réflexion et/ou des propriétés d'amortissement des objets stationnaires (O1, O2, O3, O4), dans lequel une unité de simulation (12) est prévue, laquelle est connectée à l'unité d'extraction (14) et à l'unité de données géographiques (13) et est conçue pour simuler un trajet de signal (x) du message V2X (3) à l'aide de la position d'émetteur (p2), des données géographiques d'environnement locales et de la position de véhicule (P1) présumée, pour tenir compte, lors de la simulation du trajet de signal (x), d'une réflexion et/ou d'une diffraction et/ou d'une absorption du message V2X (3) sur les objets stationnaires (O1, O2, O3, O4) et pour déterminer, à partir du trajet de signal (x) simulé et de la position de véhicule (P1) présumée, au moins une propriété de signal de réception physique simulée, et dans lequel une unité de validation (11) est prévue, laquelle est connectée à l'unité de simulation (12) et à l'unité d'analyse (15) et est conçue pour valider la position de véhicule (P1) présumée pour autant que l'au moins une propriété de signal de réception physique simulée diffère de l'au moins une propriété de signal de réception physique réelle de moins d'une valeur limite (G).
